# EUROPEAN PATENT APPLICATION

(11) **EP 4 458 500 A1**
(43) Date of publication of application: **06.11.2024**
(21) Application number: 22810683.7
(22) Date of filing: 30.06.2022
(51) Int. Cl.: B23G 1/00, B23G 1/44

(54) **THREADED MEMBER MANUFACTURING METHOD AND THREAD MACHINING DEVICE**

(30) Priority: 16.09.2021 CN 202111089446
(71) Applicant: China Nuclear Power Engineering Co., Ltd., Shenzhen, Guangdong 518124 (CN); Ling Ao Nuclear Power Co., Ltd., Shenzhen, Guangdong 518028 (CN); China General Nuclear Power Corporation, Shenzhen, Guangdong 518026 (CN); CGN Power Co., Ltd., Shenzhen, Guangdong 518026 (CN)
(72) Inventor: ZHAO, Jianguang, Shenzhen, Guangdong 518124 (CN); CHEN, Liang, Shenzhen, Guangdong 518124 (CN); ZHANG, Jianping, Shenzhen, Guangdong 518124 (CN); PANG, Yibin, Shenzhen, Guangdong 518124 (CN); ZHU, Peng, Shenzhen, Guangdong 518124 (CN); ZHANG, Feng, Shenzhen, Guangdong 518124 (CN); RAN, Xiaobing, Shenzhen, Guangdong 518124 (CN); LI, Xuejun, Shenzhen, Guangdong 518124 (CN); WANG, Long, Shenzhen, Guangdong 518124 (CN); LIU, Yanzhang, Shenzhen, Guangdong 518124 (CN); XU, Guobing, Shenzhen, Guangdong 518124 (CN); SUN, Guang, Shenzhen, Guangdong 518124 (CN); QIU, Zhensheng, Shenzhen, Guangdong 518124 (CN); SUN, Bingbing, Shenzhen, Guangdong 518124 (CN)
(74) Representative: Westphal, Mussgnug & Partner, Patentanwälte mbB
(86) International application number: PCT/CN2022/103132
(87) International publication number: WO 2022/247960

(57) **Abstract**

The present disclosure discloses a method for manufacturing a threaded component and a thread producing device. The method includes: S1, removing a failed screw section from the threaded component and grinding an exposed cross sectional surface to be flat; wherein a failure of the failed screw section includes at least one of fracture, corrosion thinning, and thread damage; S2, mounting a connection sleeve around an outer circumference of the embedded section of the threaded component and fixing the connection sleeve to the outer circumference of the embedded section, grinding a top surface of the connection sleeve until the top surface of the connection sleeve is flush with the cross sectional surface; S3, producing a screw blank section on the embedded section and the connection sleeve by laser cladding; S4, processing the screw blank section into a polish rod coaxial with the embedded section; and S5, producing a thread on the polish rod to form a new screw section, which is connected to the embedded section to form an integral threaded component. The method of the present disclosure manufactures the threaded component or the screw sections on the threaded component by laser cladding and machining, which is applicable to the overall manufacturing of threaded component or the re-manufacturing of the screw sections on the threaded component, and meets the requirements for use.

## Description

### FIELD

The present disclosure relates to the field of manufacturing technology of fasteners, and more particularly to a method for manufacturing a threaded component and a thread producing device.

### BACKGROUND

Bolt components are widely used as fasteners for connecting equipment in various fields. Taking anchor bolts as an example, the anchor bolts in service are affected by harsh using environments such as corrosion, which can lead to bolt failure and fracture, thinning of a screw waist portion or thread damage, causing safety hazards in equipment service and potentially catastrophic consequences such as equipment damage and personal injury. The safety and quality issues caused by bolt failure have attracted widespread attention. To address this issue, it is necessary to replace the bolts or repair the failed bolts.

For bolt repairing, the current common repairing methods include bolt bushing and bolt butt welding, both of which are difficult to implement. The bolt bushing repairing method requires changing of the bolt connection structure, while the application of butt welding repair is limited by deformation control and spatial accessibility during the repairing process.

In addition, when bolts need to be installed on metal substrates such as some mechanical equipment, the bolts are usually welded onto the surface of the metal substrate, which require a certain amount of operating space. When the surface of the metal substrate where the bolts need to be installed is in a relatively narrow space, the operations of welding the bolts are limited.

### SUMMARY

In order to solve the above technical problems, the present disclosure provides a method for manufacturing a threaded component that avoids the problem of processing spatial accessibility, as well as a thread producing device used in this method.

The method for manufacturing a threaded component includes the following steps:
S1, removing a failed screw section from the threaded component and grinding an exposed cross sectional surface to be flat; wherein a failure of the failed screw section includes at least one of fracture, corrosion thinning, and thread damage;
S2, mounting a connection sleeve around an outer circumference of the embedded section of the threaded component and fixing the connection sleeve to the outer circumference of the embedded section, grinding a top surface of the connection sleeve until the top surface of the connection sleeve is flush with the cross sectional surface;
S3, producing a screw blank section on the embedded section and the connection sleeve by laser cladding;
S4, processing the screw blank section into a polish rod coaxial with the embedded section; and
S5, producing a thread on the polish rod to form a new screw section, which is connected to the embedded section to form an integral threaded component.

In some embodiments, in step S1, a top portion of the embedded section located in the installation base is also removed, and an exposed top surface of the embedded section after the top portion is removed forms the cross sectional surface.

In some embodiments, before step S2, a part of the installation base around the threaded component is opened to expose the embedded section of a redetermined length, and the predetermined length is equal to or greater than a length of the connection sleeve.

In some embodiments, the method further includes the following steps:
S6, backfilling the part of the installation base and restoring the part of the installation base around the threaded component.

In some embodiments, an inner diameter of the connection sleeve is 0.05 mm-0.5 mm larger than a diameter of the embedded section; and an outer diameter of the connection sleeve is 1 mm-8 mm larger than a diameter of the embedded section.

In some embodiments, the screw blank section produced in step S3 is cylindrical, and a diameter of the screw blank section is larger than a diameter of the new screw section formed in step S5.

In some embodiments, in step S3, while the screw blank section is produced by laser cladding, the embedded section is cooled by water.

In some embodiments, in step S3, the embedded section is cooled by a water cooling device; the water cooling device includes a water tank for supplying cooling water, a pressurizing pump arranged in the water tank, a water cooling sleeve, a water inlet pipe connected between the water cooling sleeve and the pressurizing pump, and a water outlet pipe connected between the water cooling sleeve and the water tank;

the water cooling sleeve is installed on an outer circumference of the embedded section; after the pressurizing pump is started, the cooling water in the water tank enters the water cooling sleeve through the water inlet pipe, cools the embedded section, and then flows back to the water tank through the water outlet pipe.

In some embodiments, in step S4, the screw blank section is processed using a processing and positioning device; the processing and positioning device includes a fixed platform, a magnetic drill mounted on the fixed platform, and a first positioning clamp;
step S4 includes:
S4.1, fixing the processing and positioning device on the installation base through the fixed platform and allowing the processing and positioning device to be located on one side of the threaded component;
S4.2, clamping the first positioning clamp on the embedded section, such that the processing and positioning device and the threaded component are relatively fixed;
S4.3, aligning a hollow drill bit of the magnetic drill above the screw blank section; and
S4.4, starting the magnetic drill, driving the hollow drill bit to rotate and move downwards along an axial direction of the screw blank section, processing the screw blank section into the polish rod that is concentric with the embedded section and has a same diameter as the embedded section.

In some embodiments, the processing and positioning device further includes a second positioning clamp and a positioning block; the second positioning clamp and the positioning block respectively tightly abut both sides of the magnetic drill and fixed on the fixed platform, positioning the magnetic drill on the fixed platform.

In some embodiments, in step S5, a thread producing device is used to produce the thread on the polish rod; the thread producing device includes a power mechanism, a grinding head connected to an output shaft of the power mechanism, a standard bolt arranged in parallel with an axial direction of the output shaft of the power mechanism, a step control mechanism connected to the power mechanism and threadedly engaging with an outer circumference of the standard bolt, and a coupling arranged at an end of the standard bolt;
step S5 includes:
S5.1, axially connecting the standard bolt to the polish rod through the coupling, with the grinding head corresponding to on one side of the polish rod and being tangent to the polish rod;
S5.2, starting the power mechanism to drive the grinding head to rotate; and
S5.3, driving the step control mechanism and the power mechanism to rotate around the standard bolt as an axis, driving the grinding head to move along an axial direction of the polish rod, and producing the thread on an outer circumference of the polish rod.

In some embodiments, the threaded component is an anchor bolt; the installation base is a concrete member.

The present disclosure further provides another method for manufacturing a threaded component, including the following steps:
S1, producing a blank rod on a metal substrate by laser cladding;
S2, processing the blank rod to produce a cylindrical polish rod; and
S3, producing a thread on the polish rod to form the threaded component.

In some embodiments, in step S3, a thread producing device is used to form the thread on the polish rod; the thread producing device includes a power mechanism, a grinding head connected to an output shaft of the power mechanism, a standard bolt arranged in parallel with an axial direction of the output shaft of the power mechanism, a step control mechanism connected to the power mechanism and threadedly engaging with an outer circumference of the standard bolt, and a coupling arranged at an end of the standard bolt;
step S3 includes:
S3.1, axially connecting the standard bolt to the polish rod through a coupling, with the grinding head corresponding to one side of the polish rod and being tangent to the polish rod;
S3.2, starting the power mechanism to drive the grinding head to rotate; and
S3.3, driving the step control mechanism and the power mechanism to rotate around the standard bolt as an axis, driving the grinding head to move along an axial direction of the polish rod, and producing the thread on an outer circumference of the polish rod.

The present disclosure further provides a thread producing device used in the above two methods for manufacturing a threaded component; the thread producing device includes a power mechanism, a grinding head connected to an output shaft of the power mechanism, a standard bolt arranged in parallel with an axial direction of the output shaft of the power mechanism, a step control mechanism connected to the power mechanism and threadedly engaging with an outer circumference of the standard bolt, and a coupling arranged at an end of the standard bolt.

In some embodiments, the step control mechanism includes a connecting shaft sleeve; a shaft hole is defined in the connecting shaft sleeve and passes through opposite ends of the connecting shaft sleeve, and an internal thread engaging with the standard bolt is formed in the shaft hole;
the connecting shaft sleeve is connected to the power mechanism through a connecting member and is relatively fixed to the power mechanism;
the standard bolt is inserted into the shaft hole and engages with the internal thread of the shaft hole; the connecting shaft sleeve is movable up and down along an axial direction of the standard bolt.

The method of the present disclosure manufactures the threaded component or the screw section on the threaded component by laser cladding cooperating with machining, which is applicable to the overall manufacturing of the threaded component or the re-manufacturing of the screw section on the threaded component, meeting the requirements for use.

When the method of the present disclosure is applied to the manufacturing of bolt rods, the previously failed screw section is replaced, and the threaded component can be restored to its original structural dimensions and performance, meeting the requirements for use and completely avoiding the problems of bolt connection structure changes, deformation, and process spatial accessibility caused by traditional repairing processes.

When the method of the present disclosure is applied to the overall manufacturing of the threaded component, the threaded component (such as bolts) can be integrally formed on any metal substrate, meeting the requirements for use and solving the problem of process spatial accessibility.

### BRIEF DESCRIPTION OF THE DRAWINGS

To describe the technical solutions in the embodiments of the present disclosure more clearly, the following briefly introduces the accompanying drawings required for describing the embodiments or the prior art. Apparently, the accompanying drawings in the following description show merely some embodiments of the present disclosure, and persons of ordinary skill in the art may still derive other drawings from these accompanying drawings without creative efforts.

The present disclosure will be further described in combination with the accompanying drawings and embodiments. In the drawings:
FIG. 1 is a structure schematic view showing a manufacturing process of a threaded component according to a method for manufacturing a threaded component according to an embodiment of the present disclosure (in cross-sectional view);
FIG. 2 is a structure schematic view of a water cooling device used in the method for manufacturing a threaded component according to an embodiment of the present disclosure;
FIG. 3 is a structure schematic view of a processing and positioning device used in the method for manufacturing a threaded component according to an embodiment of the present disclosure;
FIG. 4 is a structure schematic view of a thread producing device used in the method for manufacturing a threaded component according to an embodiment of the present disclosure; and
FIG. 5 is a structure schematic view showing a manufacturing process of a threaded component according to a method for manufacturing a threaded component according to another embodiment of the present disclosure (in cross-sectional view).

### DETAILED DESCRIPTION

In order to make the objectives, features, and advantages of the present disclosure more obvious and understandable, the technical solutions in the embodiments of the present disclosure will be clearly and completely described below in conjunction with the accompanying drawings of the embodiments of the present disclosure.

A method for manufacturing a threaded component according to an embodiment of the present disclosure is applicable to the repairing of failed threaded components by means of re-manufacturing. The threaded component includes an embedded section embedded in an installation base and a screw section protruding from the installation base. A failed part of the threaded component is usually the screw section located above the installation base.

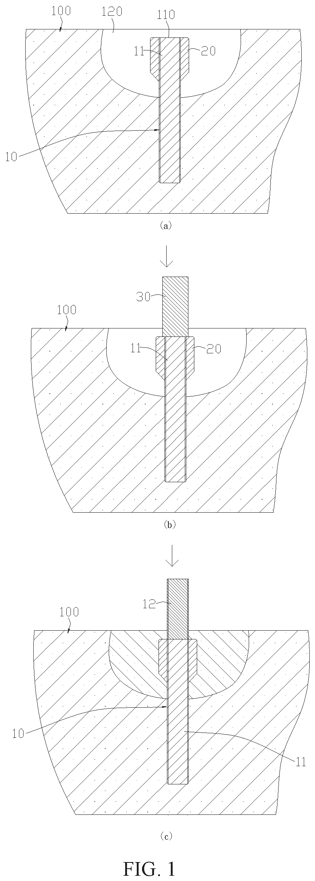

Referring to FIGS. 1-4, the method for manufacturing a threaded component may include steps as follows.

S1, removing a failed screw section and grinding a cross sectional surface 110 to be flat.

The failure of the failed screw section may include at least one of fracture, corrosion thinning, and thread damage. As the part (a) shown in FIG. 1, the failed screw section of the threaded component 10 is removed by machining or grinding, leaving behind the embedded section 11 located in the installation base 100. A top surface exposed on the embedded section 11 is the cross sectional surface 110 formed after the failed screw section is removed.

Sandpaper and other materials are used to grind the cross sectional surface 110 to a flat surface to meet the process requirements for subsequent laser cladding on the cross sectional surface 110.

In addition, visual inspection can be conducted on all accessible surfaces of the remaining bolt portion (namely the embedded section 11), and the surface is required to be intact and free from cracks, holes, or other harmful defects. In an embodiment, a liquid penetrant testing can be performed on all the accessible surfaces of the remaining bolt portion in accordance with NB/T 47013.5-2015 "Non destructive Testing of Pressure Equipment", and a sensitivity level of the remaining bolt portion is required to be B or C; furthermore, the remaining bolt portion can be accepted according to the quality grading requirements of Level I specified in NB/T 47013.5-2015; moreover, no cracks are allowed.

In an embodiment, the step S1 also includes removing a top portion of the embedded section 11 located in the installation base 100. A length of the removed top portion is determined according to need and does not need to be too long, as long as the subsequent manufacturing of a complete screw section can be ensured. The exposed top surface of the embedded section 11 after the top portion is removed forms the cross sectional surface 110.

Step S2, mounting a connection sleeve 20 around an outer circumference of the embedded section 11 of the threaded component 10 and fixing the connection sleeve 20 to the embedded section 11, and grinding a top surface of the connection sleeve 20 until the top surface of the connection sleeve 20 is flush with the cross sectional surface 110, as the part (a) shown in FIG. 1.

The connection sleeve 20 is prepared in advance and can be made of the same material as the threaded component 10 or other metals. The connection sleeve 20 is a cylindrical structure with two opened ends. After being mounted around the embedded section 11, the connection sleeve 20 is welded to an outer circumference of an upper end of the embedded section 11 by spot welding or other methods.

Alternatively, an inner diameter of the connection sleeve 20 is 0.05 mm-0.5 mm larger than a diameter of the embedded section 11, and an outer diameter of the connection sleeve 20 is 1 mm-8 mm larger than the diameter of the embedded section 11.

The connection sleeve 20 mounted around the embedded section 11 expands the diameter of the embedded section 11 by the sleeving method, facilitating the subsequent manufacturing of a column body with sufficient bolt processing allowance.

With the connection sleeve 20 mentioned above, before the step S2, a portion of the installation base 100 located around the threaded component 10 is opened to form a groove 120, and a depth of the groove 120 is sufficient to expose the embedded section 11 of a predetermined length. The predetermined length of the exposed embedded section 11 is equal to or greater than a length of the connection sleeve 20, which facilitates lowering the connection sleeve 20 onto the embedded section 11 and welding a lower end of the connection sleeve 20 onto the embedded section 11.

In addition, an area of the groove 120 is based on the space required for the subsequent laser cladding operations.

S3, producing a screw blank section 30 on the embedded section 11 and the connection sleeve 20 by laser cladding, as the part (b) shown in FIG. 1.

In this step, a mobile laser cladding device is used to produce the screw blank section 30 on the embedded section 11 and the connection sleeve 20; metal powder matching with the performance of the bolt is used as the laser cladding powder, which can be, but is not limited to, high-strength steel, stainless steel, or martensitic steel. The produced screw blank section 30 can be cylindrical, with a diameter larger than a diameter of a new screw section to be processed and formed subsequently. A length of the screw blank section 30 can be greater than a length of the new screw section to be processed and formed subsequently, such that the screw blank section 30 has sufficient processing allowance.

The mobile laser cladding device mainly includes a front-end actuator and a rear-end device. The front-end actuator includes a multi-axis industrial robot, a mobile carrying vehicle, an electrical control system, a powder feeding mechanism, a laser cladding head, a cladding nozzle, etc. The rear-end device includes a high-power fiber laser, a water cooler, a power supply box, a protective gas, etc. During operation, the same industrial robot in the front-end actuator is used to complete the production and automatic grinding of the screw blank section 30.

After the screw blank section 30 on the embedded section 11 is obtained, post-processing (such as stress relief heat treatment) is conducted on the screw blank section 30 to eliminate residual stress and complete the organization and performance adjustment.

Furthermore, during the laser cladding process, the entire screw blank section 30 is obtained in a layered manner, in which a front layer preheats a back layer and the back layer post-heats the front layer, resulting in thermal accumulation in the manufacturing area. This accumulation is prone to oxidation and the generation of large residual stresses in the manufacturing area, causing performance degradation and cracking in the manufacturing area. Therefore, to solve the above problems, in the manufacturing process of the screw blank section 30 using laser cladding, the embedded section 11 is cooled by water, thus achieving cooling of the manufacturing area.

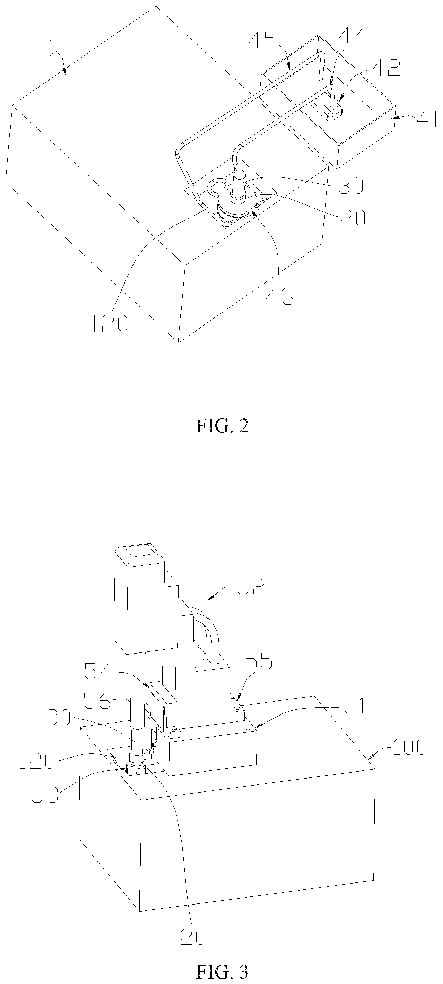

In an embodiment, the embedded section 11 is cooled by a water cooling device. As shown in FIG. 2, the water cooling device may include a water tank 41, a pressurizing pump 42 arranged in the water tank 41, a water cooling sleeve 43, a water inlet pipe 44 connected between the water cooling sleeve 43 and the pressurizing pump 42, and a water outlet pipe 45 connected between the water cooling sleeve 43 and the water tank 41.

The water tank 41 is used to contain cooling water and provide cooling water for the water cooling sleeve 43. The water tank 41 can be opened or closed. To increase the cooling effect of the cooling water, ice cubes can also be added into the water tank 41. A circumferentially extending water flow channel can be formed inside the water cooling sleeve 43 for the circulation of cooling water. The water flow channel can be a spiral flow channel. Water holes in communication with the water flow channel are respectively defined in both sides of the water cooling sleeve 43, and the water holes are used to connect the water inlet pipe 44 and the water outlet pipe 45 respectively. The water cooling sleeve 43 can further be formed by the relative cooperation of two symmetrically-arranged semicircular split pieces, which is convenient for disassembly and assembly of the water cooling sleeve 43 on the embedded section 11.

During installation, the water cooling sleeve 43 is installed on the outer circumference of the embedded section 11, and the water tank 41 can be arranged on the installation base 100 and away from the groove 120. The water cooling sleeve 43 can be directly clamped on an outer circumference of the connection sleeve 20 on the embedded section 11, or clamped on the outer circumference of the embedded section 11 below the connection sleeve 20; the screw blank section 30 is located above the water cooling sleeve 43.

During operation, the pressurizing pump 42 is started, and the cooling water in the water tank 41 enters the water cooling sleeve 43 through the water inlet pipe 44. After cooling the embedded section 11, the water returns to the water tank 41 through the water outlet pipe 45. The cooling water circulates in such way, continuously cooling the embedded section 11 during the laser cladding process.

After the screw blank section 30 is obtained using laser cladding, the water cooling device and the mobile laser cladding device are removed for subsequent processing.

S4, processing the screw blank section 30 into a polish rod coaxial with the embedded section 11.

For the threaded component 10 with a uniform diameter, the polish rod formed by processing the screw blank section 30 is also concentric with the embedded section 11 and has the same diameter as the embedded section 11.

In the present disclosure, a processing and positioning device is used to process the screw blank section 30.

As shown in FIG. 3, the processing and positioning device can include a fixed platform 51, a magnetic drill 52 mounted on the fixed platform 51, a first positioning clamp 53, a second positioning clamp 54, and a positioning block 55. The magnetic drill 52 includes a hollow drill bit as a processing drill bit.

Referring to FIG. 1 and FIG. 3, in combination with the processing and positioning device, the step S4 may include steps as follows.

S4.1, fixing the processing and positioning device on the installation base 100 through the fixed platform 51 and allowing the processing and positioning device to be located on one side of the threaded component 10.

The fixed platform 51 is made of materials such as carbon steel that can be adsorbed and positioned by the magnetic drill 52. The first positioning clamp 53 protrudes from one side of the fixed platform 51; on the installation base 100, one side of the fixed platform 51 on which the first positioning claim 53 is located faces the threaded component 10, and the first positioning clamp 53 enters the groove 120 where the threaded component 10 is located.

The second positioning clamp 54 and the positioning block 55 respectively tightly abut both sides of the magnetic drill 52, and are fixed on the fixed platform 51 through fasteners, positioning the magnetic drill 52 on the fixed platform 51.

S4.2, clamping the first positioning clamp 53 on the embedded section 11 to fix the processing and positioning device and the threaded component 10 relatively.

The first positioning clamp 53 can be directly clamped on the outer circumference of the connection sleeve 20 on the embedded section 11, or clamped on the outer circumference of the embedded section 11 below the connection sleeve 20. The screw blank section 30 is located above the first positioning clamp 53.

A magnet switch of the magnetic drill 52 is turned on and after the magnetic drill 52 is powered on, an electromagnet on a base of the magnetic drill 52 generates a magnetic field, absorbing the magnetic drill 52 to the fixed platform 51. The stability of the magnetic drill 52 on the fixed platform 51 can be ensured with the second positioning clamp 54 and the positioning block 55, which avoids shaking of the magnetic drill 52 during subsequent work and ensures machining accuracy.

S4.3, aligning the hollow drill bit 56 of the magnetic drill 52 above the screw blank section 30.

An inner diameter of the hollow drill bit 56 is the same as the diameter of the polish rod (or the embedded section 11) to be processed and formed.

The hollow drill bit 56 of the magnetic drill 52 is aligned above the screw blank section 30.

S4.4, starting the magnetic drill 52, driving the hollow drill bit 56 to rotate and and move downwards along an axial direction of the screw blank section 30, processing the screw blank section 30 to form the polish rod that is concentric with the embedded section 11 and has the same diameter as the embedded section 11.

After the above processing is completed, the processing and positioning device is removed and a thread producing device is installed.

After the polish rod is formed, all accessible surfaces of the polish rod should be subjected to the liquid penetrant testing in accordance with NB/T 20003.4-2010, and no harmful defects such as cracks are allowed.

S5, producing a thread on the polish rod to form a new screw section 12, which is connected to the embedded section 11 to form the integral threaded component 10, as the part (c) shown in FIG. 1.

In the present disclosure, the thread producing device is used to produce the thread on the polish rod, forming the new screw section 12.

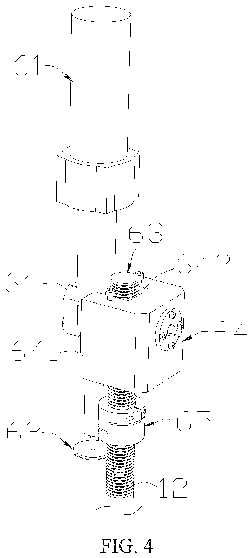

As shown in FIG. 4, the thread producing device includes a power mechanism 61, a grinding head 62, a standard bolt 63, a step control mechanism 64, and a coupling 65.

The power mechanism 61 can include a motor. The grinding head 62 is arranged according to A type of the thread of the new screw section 12 to be formed, ensuring that a size of the thread after grinding meets the requirements. The grinding head 62 is connected to an output shaft of the power mechanism 61 and is rotated by the power mechanism 61 after the power mechanism 61 is started.

The standard bolt 63 is arranged in axial parallel with the output shaft of the power mechanism 61. The standard bolt 63 serves as a reference for the screw section 12 to be formed and provides a track for subsequent thread processing, controlling a pitch of the screw section 12. The coupling 65 is arranged at an end of the standard bolt 63.

The step control mechanism 64 is connected to the power mechanism 61 and fixed relative to the power mechanism 61. In addition, the step control mechanism 64 engages with the outer circumference of the standard bolt 63 through the thread and is moveable up and down along an axial direction of the standard bolt 63.

The step control mechanism 64 may further include a connecting shaft sleeve 641, which is connected to the power mechanism 61 through a connecting member 66. The connecting member 66 may be a structural member such as a clamp or a clip. The connecting shaft sleeve 641 may be cylindrical or polyhedral. A shaft hole 642 is defined in the connecting shaft sleeve 641 and passes through opposite ends of the connecting shaft sleeve 641. An internal thread (not shown) engageable with the standard bolt 63 is formed in the shaft hole 642.

The standard bolt 63 is inserted into the shaft hole 642 and engages with the internal thread of the shaft hole 642. One end of the standard bolt 63 extends out of one end of the connecting shaft sleeve 641, and the coupling 65 is mounted on the end of the standard bolt 63 extending out of the shaft hole 642.

In combination with FIG. 1 and FIG. 4, the step S5 can include steps as follows.

S5.1, axially connecting the standard bolt 63 to the polish rod through the coupling 65, with the grinding head 62 corresponding to one side of the polish rod and being tangent to the polish rod.

S5.2, starting the power mechanism 61 to drive the grinding head 62 to rotate.

S5.3, driving the step control mechanism 64 and the power mechanism 61 to rotate around the standard bolt 63 as an axis, driving the grinding head 62 to move along an axial direction of the polish rod, and producing the thread on an outer circumference of the polish rod to form the new screw section 12.

The step control mechanism 64 and the power mechanism 61 can be driven to rotate manually or through a driving device. When the step control mechanism 64 rotates relative to the standard bolt 63, due to the thread engagement between the step control mechanism 64 and the standard bolt 63, the rotation of the step control mechanism 64 is converted into axial movement, and the step control mechanism 64 moves downwards along the axial direction of the standard bolt 63, driving the entire power mechanism 61 and the grinding head 62 to move downwards. The grinding head 62 processes the polish rod to produce the axially-extending thread on the polish rod.

A tangential distance between the grinding head 62 and the polish rod is adjustable, allowing the thread to meet the requirements for depth and shallowness. The adjustment of the tangential distance between the grinding head 62 and the polish rod can be achieved by adjusting a distance between the step control mechanism 64 and the power mechanism 61.

During the thread production process, cooling fluid is used to cool the processed part as needed, for example, cooling oil can be used to spray the polish rod.

To improve the accuracy of the thread production, grinding heads of different specifications and sizes can be used to produce the thread in sequence. For example, rough grinding of the thread is performed first, followed by fine grinding. During the fine grinding process, the speed is 2-10 times faster than that of the rough grinding to improve the surface roughness of the bolt.

Additionally, after the thread production is completed and the thread producing device is removed, cutting or grinding tools are used to remove the portion of the screw section 12 (with an axial length of approximately 15mm) which was originally sleeved by the coupling 65. For the thread on the screw section 12, a die is manually used to smooth the thread and remove surface burrs.

Understandably, after the thread production is completed, the screw section 12 is also inspected using a go/no-go gauge: if the "go gauge" can freely pass through the thread, and the "no-go gauge" can be screwed into the effective thread pattern for no more than 2.5 turns, the thread is considered to be qualified.

S6, backfilling the opened installation base and restoring the installation base 100 around the threaded component 10.

The connection sleeve 20 on the embedded section 11 does not need to be removed and can be embedded within the installation base 100.

Understandably, in the method for manufacturing a threaded component according to the above embodiment, the threaded component can be, but is not limited to, an anchor bolt, and the installation base 100 includes, but is not limited to, a concrete part, a metal installation platform, etc. When the threaded component is an anchor bolt, the installation base 100 on which the anchor bolt is located is usually a concrete member, such as a concrete floor or concrete wallboard.

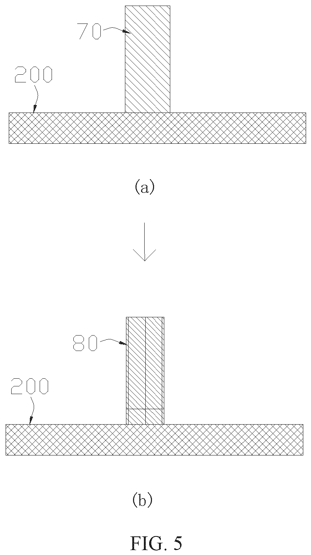

A method for manufacturing a threaded component according to another embodiment of the present disclosure is applicable to manufacturing a threaded component on a metal substrate that requires the threaded component to be a connecting part, which replaces the present bolt welding method, and is particularly applicable to a situation where an operation space on the metal substrate is relatively narrow and a welding operation is inconvenient. Referring to FIG. 5, the method for manufacturing a threaded component of this embodiment may include steps as follows.

S1, manufacturing a blank rod 70 on a metal substrate 200 by laser cladding, as the part (a) shown in FIG. 5.

In this step, one or more connection positions are determined on the metal substrate 200 according to the requirements, and the blank rod 70 is manufactured on the connection positions of the metal substrate 200 using a mobile laser cladding device. Metal powder matching with the performance of the bolt is used as the laser cladding powder, which can be but is not limited to high-strength steel, stainless steel, or martensitic steel.

According to the actual laser cladding situation, the formed blank rod 70 can be polygonal, circular, elliptical or other irregular shapes. An overall peripheral size of the blank rod 70 is larger than that of the threaded component to be manufactured, and a length of the blank rod 70 (i.e., a height of the blank rod 70 on the metal substrate 200) is also greater than a length of the threaded component to be manufactured, such that the blank rod 70 has sufficient machining allowance.

The mobile laser cladding device mainly includes a front-end actuator and a rear-end device. The front-end actuator includes a multi-axis industrial robot, a mobile carrying vehicle, an electrical control system, a powder feeding mechanism, a laser cladding head, a cladding nozzle, etc. The rear-end device includes a high-power fiber laser, a water cooler, a power supply box, a protective gas, etc. During operation, the same industrial robot in the front-end actuator is used to complete the manufacturing and automatic grinding of the screw blank section 30.

To improve the connection stability of the blank rod 70 on the metal substrate 200, a positioning groove can be pre-formed at the connection position of the metal substrate 200. Before the blank rod 70 is formed, the positioning groove is filled up by laser cladding to form a reinforced base. Then, the laser cladding is performed on the reinforced base to obtain the blank rod 70 in a layered manner.

After the blank rod 70 is formed, post-processing (such as stress relief heat treatment) is performed on the blank rod 70 to eliminate residual stress and complete the organization and performance adjustment. The surface of the reinforced base is ground with sandpaper and other materials until the surface is flat and flush with the metal substrate 200.

Furthermore, during the laser cladding process, the entire blank rod 70 is obtained in a layered manner, in which a front layer pre-heats a back layer and the back layer post-heats the front layer, resulting in thermal accumulation in the manufacturing area. This accumulation is prone to oxidation and the generation of large residual stresses in the manufacturing area, causing performance degradation and cracking in the manufacturing area. Therefore, to solve the above problems, the metal substrate 200 can be cooled by water while the blank rod 70 is being produced by laser cladding, thus achieving cooling of the manufacturing area.

After the blank rod 70 is formed by laser cladding, the mobile laser cladding device is removed for subsequent processing.

S2, processing the blank rod 70 into a cylindrical polish rod.

In this step, a processing and positioning device shown in FIG. 3 can be used to achieve the desired result. Compared to the threaded component manufacturing method of the above embodiment, there is no need to use the first positioning clamp 53. The hollow drill bit 56 of the magnetic drill 52 of the processing and positioning device is aligned above the blank rod 70, and the blank rod 70 is processed into the polish rod with a predetermined diameter.

After the above processing is completed, the processing and positioning device is removed and a thread producing device is installed.

After the polish rod is formed, all accessible surfaces of the polish rod should be subjected to liquid penetrant testing in accordance with NB/T 20003.4-2010, and no harmful defects such as cracks are allowed.

S3, producing a thread on the polish rod to form a threaded component 80, as the part (b) shown in FIG. 5.

In this step, referring to the above embodiment, the thread producing device is used to produce the thread on the polish rod, forming the threaded component 80.

As shown in FIG. 4, when the thread is produced, the standard bolt 63 is axially connected to the polish rod through the coupling 65, and the grinding head 62 is correspondingly positioned on one side of the polish rod and is tangent to the polish rod.

S5.2, starting the power mechanism 61 to drive the grinding head 62 to rotate.

S5.3, driving the step control mechanism 64 and the power mechanism 61 to rotate around the standard bolt 63 as an axis, driving the grinding head 62 to move along the axial direction of the polish rod, and producing the thread on the outer circumference of the polish rod to form the threaded component 80.

The step control mechanism 64 and the power mechanism 61 can be driven to rotate manually or through a driving device. When the step control mechanism 64 rotates relative to the standard bolt 63, due to the thread engagement between the step control mechanism 64 and the standard bolt 63, the rotation of the step control mechanism 64 is converted into axial movement, and the step control mechanism 64 moves downwards along the axial direction of the standard bolt 63, driving the entire power mechanism 61 and the grinding head 62 to move downwards. The grinding head 62 processes the polish rod to produce the axially-extending thread on the polish rod.

A tangential distance between the grinding head 62 and the polish rod is adjustable, allowing the thread to meet the requirements for depth and shallowness. The tangential distance between the grinding head 62 and the polish rod can be adjusted by adjusting a distance between the step control mechanism 64 and the power mechanism 61.

During the thread production process, cooling fluid is used to cool the processed part as needed, for example, cooling oil can be used to spray the polish rod.

To improve the accuracy of the thread production, grinding heads of different specifications and sizes can be used to produce the thread in sequence. For example, rough grinding of the thread is performed first, followed by fine grinding. During the fine grinding process, the speed of the grinding head is 2-10 times faster than that of the grinding head in the rough grinding to improve the surface roughness of the bolt.

Additionally, after the thread production is completed and the thread producing device is removed, cutting or grinding tools are used to remove the portion of the screw section 12 (with an axial length of approximately 15mm) which was originally sleeved by the coupling 65. For the thread on the screw section 12, a die is manually used to smooth the thread and remove surface burrs.

After the thread production is completed, the screw section 12 is also inspected using a go/no-go gauge: if the "go gauge" can freely pass through the thread, and the "no-go gauge" can be screwed into the effective thread pattern for no more than 2.5 turns, the thread is considered to be qualified.

The method for manufacturing a threaded component of this embodiment can produce a threaded component such as but not limited to a bolt, a hook with thread, etc. The metal substrate 200 can be various metal door panels, panels, metal walls, mechanical equipment, etc., as long as the metal substrate 20 requires the arrangement of the threaded component and the threaded component formed by laser cladding can be connected to the metal substrate 20 as an integral base.

It is understandable that the above-mentioned technical features may be used in any combination without limitation. The above descriptions are only the embodiments of the present disclosure, which do not limit the scope of the present disclosure. Any equivalent structure or equivalent process transformation made by using the content of the description and drawings of the present disclosure, or directly or indirectly applied to other related technologies in the same way, all fields are included in the scope of patent protection of the present disclosure.

## Claims

1. A method for manufacturing a threaded component, wherein the threaded component comprises an embedded section embedded in an installation base and a screw section protruding from the installation base; the method for manufacturing the threaded component comprises the following steps:
S 1, removing a failed screw section from the threaded component and grinding an exposed cross sectional surface to be flat; wherein a failure of the failed screw section comprises at least one of fracture, corrosion thinning, and thread damage;
S2, mounting a connection sleeve around an outer circumference of the embedded section of the threaded component and fixing the connection sleeve to the outer circumference of the embedded section, grinding a top surface of the connection sleeve until the top surface of the connection sleeve is flush with the cross sectional surface;
S3, producing a screw blank section on the embedded section and the connection sleeve by laser cladding;
S4, processing the screw blank section into a polish rod coaxial with the embedded section; and
S5, producing a thread on the polish rod to form a new screw section, which is connected to the embedded section to form an integral threaded component.

2. The method according to claim 1, wherein in step S1, a top portion of the embedded section located in the installation base is also removed, and an exposed top surface of the embedded section after the top portion is removed forms the cross sectional surface.

3. The method according to claim 1, wherein before step S2, a part of the installation base around the threaded component is opened to expose the embedded section of a predetermined length, and the predetermined length is equal to or greater than a length of the connection sleeve.

4. The method according to claim 3, further comprising the following steps:
S6, backfilling the part of the installation base and restoring the part of the installation base around the threaded component.

5. The method according to claim 1, wherein an inner diameter of the connection sleeve is 0.05 mm-0.5 mm larger than a diameter of the embedded section; and an outer diameter of the connection sleeve is 1 mm-8 mm larger than a diameter of the embedded section.

6. The method according to claim 1, wherein the screw blank section produced in step S3 is cylindrical, and a diameter of the screw blank section is larger than a diameter of the new screw section formed in step S5.

7. The method according to claim 1, wherein in step S3, while the screw blank section is produced by laser cladding, the embedded section is cooled by water.

8. The method according to claim 7, wherein in step S3, the embedded section is cooled by a water cooling device; the water cooling device comprises a water tank for supplying cooling water, a pressurizing pump arranged in the water tank, a water cooling sleeve, a water inlet pipe connected between the water cooling sleeve and the pressurizing pump, and a water outlet pipe connected between the water cooling sleeve and the water tank;
the water cooling sleeve is installed on an outer circumference of the embedded section; after the pressurizing pump is started, the cooling water in the water tank enters the water cooling sleeve through the water inlet pipe, cools the embedded section, and then flows back to the water tank through the water outlet pipe.

9. The method according to claim 1, wherein in step S4, the screw blank section is processed using a processing and positioning device; the processing and positioning device comprises a fixed platform, a magnetic drill mounted on the fixed platform, and a first positioning clamp;
step S4 comprises:
S4. 1, fixing the processing and positioning device on the installation base through the fixed platform and allowing the processing and positioning device to be located on one side of the threaded component;
S4.2, clamping the first positioning clamp on the embedded section, such that the processing and positioning device and the threaded component are relatively fixed;
S4.3, aligning a hollow drill bit of the magnetic drill above the screw blank section; and
S4.4, starting the magnetic drill, driving the hollow drill bit to rotate and move downwards along an axial direction of the screw blank section, processing the screw blank section into the polish rod that is concentric with the embedded section and has a same diameter as the embedded section.

10. The method according to claim 9, wherein the processing and positioning device further comprises a second positioning clamp and a positioning block; the second positioning clamp and the positioning block respectively tightly abut both sides of the magnetic drill and fixed on the fixed platform, positioning the magnetic drill on the fixed platform.

11. The method according to claim 1, wherein in step S5, a thread producing device is used to produce the thread on the polish rod; the thread producing device comprises a power mechanism, a grinding head connected to an output shaft of the power mechanism, a standard bolt arranged in parallel with an axial direction of the output shaft of the power mechanism, a step control mechanism connected to the power mechanism and threadedly engaging with an outer circumference of the standard bolt, and a coupling arranged at an end of the standard bolt;
step S5 comprises:
S5.1, axially connecting the standard bolt to the polish rod through the coupling, with the grinding head corresponding to on one side of the polish rod and being tangent to the polish rod;
S5.2, starting the power mechanism to drive the grinding head to rotate; and
S5.3, driving the step control mechanism and the power mechanism to rotate around the standard bolt as an axis, driving the grinding head to move along an axial direction of the polish rod, and producing the thread on an outer circumference of the polish rod.

12. The method according to any one of claims 1 to 11, wherein the threaded component is an anchor bolt; the installation base is a concrete member.

13. A method for manufacturing a threaded component, comprising the following steps:
S 1, producing a blank rod on a metal substrate by laser cladding;
S2, processing the blank rod to produce a cylindrical polish rod; and
S3, producing a thread on the polish rod to form the threaded component.

14. The method according to claim 13, wherein in step S3, a thread producing device is used to form the thread on the polish rod; the thread producing device comprises a power mechanism, a grinding head connected to an output shaft of the power mechanism, a standard bolt arranged in parallel with an axial direction of the output shaft of the power mechanism, a step control mechanism connected to the power mechanism and threadedly engaging with an outer circumference of the standard bolt, and a coupling arranged at an end of the standard bolt;
step S3 comprises:
53.1, axially connecting the standard bolt to the polish rod through a coupling, with the grinding head corresponding to one side of the polish rod and being tangent to the polish rod;
53.2, starting the power mechanism to drive the grinding head to rotate; and
S3.3, driving the step control mechanism and the power mechanism to rotate around the standard bolt as an axis, driving the grinding head to move along an axial direction of the polish rod, and producing the thread on an outer circumference of the polish rod.

15. A thread producing device, wherein the thread producing device is used for the method for manufacturing a threaded component according to any one of claims 1-12 or the method for manufacturing a threaded component according to any one of claims 13-14; the thread producing device comprises a power mechanism, a grinding head connected to an output shaft of the power mechanism, a standard bolt arranged in parallel with an axial direction of the output shaft of the power mechanism, a step control mechanism connected to the power mechanism and threadedly engaging with an outer circumference of the standard bolt, and a coupling arranged at an end of the standard bolt.

16. The thread producing device according to claim 15, wherein the step control mechanism comprises a connecting shaft sleeve; a shaft hole is defined in the connecting shaft sleeve and passes through opposite ends of the connecting shaft sleeve, and an internal thread engaging with the standard bolt is formed in the shaft hole;
the connecting shaft sleeve is connected to the power mechanism through a connecting member and is relatively fixed to the power mechanism;
the standard bolt is inserted into the shaft hole and engages with the internal thread of the shaft hole; the connecting shaft sleeve is movable up and down along an axial direction of the standard bolt.
